(19) **Europäisches Patentamt**

**European Patent Office**

**Office européen des brevets**

(11) Veröffentlichungsnummer: **0 233 518 B1**

(12) # EUROPÄISCHE PATENTSCHRIFT

(45) Veröffentlichungstag der Patentschrift: **31.03.93**

(21) Anmeldenummer: **87101170.6**

(22) Anmeldetag: **28.01.87**

(51) Int. Cl.⁵: **H04Q 11/04**, H04M 9/02

(54) **Schaltungsanordnung zum Vermitteln von Binärsignalen, insbesondere PCM-Signalen.**

(30) Priorität: **17.02.86 DE 3604966**

(43) Veröffentlichungstag der Anmeldung:
**26.08.87 Patentblatt 87/35**

(45) Bekanntmachung des Hinweises auf die
Patenterteilung:
**31.03.93 Patentblatt 93/13**

(84) Benannte Vertragsstaaten:
**AT BE CH DE ES FR GB GR IT LI LU NL SE**

(56) Entgegenhaltungen:
**EP-A- 0 009 461**
**EP-A- 0 017 835**
**DE-A- 3 128 234**

(73) Patentinhaber: **SIEMENS AKTIENGESELL-
SCHAFT
Wittelsbacherplatz 2
W-8000 München 2(DE)**

(72) Erfinder: **Backhaus, Martin
D. Bonhoeffer-Strasse 33
W-4790 Paderborn(DE)**
Erfinder: **Lubcke, Hartmut
Hudeweg 30
W-4790 Paderborn(DE)**
Erfinder: **Ahrens, Werner
Mentropstrasse 82a
W-4790 Paderborn(DE)**

## Beschreibung

Die Erfindung bezieht sich auf eine Schaltungsanordnung zum Vermitteln von Binärsignalen, insbesondere PCM-Signalen, gemäß dem Oberbegriff des Anspruchs 1.

Eine Schaltungsanordnung der vorstehend bezeichneten Art ist bereits bekannt (DE-PS 29 15 488 & EP-A-0 017 835). Es hat sich gezeigt, daß zuweilen die Anschlußmöglichkeiten für die einzelnen Anschlußschaltungen, bei denen es sich um Teilnehmerschaltungen und um Amtsübertragungen handeln kann, zu stark eingeschränkt sind. Ferner wurde die Vermittlungskapazität der bekannten Schaltungsanordnung zuweilen als unzureichend empfunden. Daraus resultiert der Wunsch nach einer Erweiterung der bekannten Schaltungsanordnung.

Zur Erhöhung der Vermittlungskapazität bei einer Schaltungsanordnung der eingangs genannten Art könnte zunächst daran gedacht werden, die die einzelnen Gruppenschienen miteinander verbindende Ringleitungsanordnung durch ein Koppelnetz zu ersetzen. Koppelnetze für Zeitmultiplex-Vermittlungsanlagen sind in großer Zahl bereits bekannt ("NTZ", 1970, Heft 9, Seiten 465 bis 471). Die bekannten Koppelnetze weisen Raum- und ZeitStufen in unterschiedlicher Zusammenfassung auf. Als Nachteil der Anwendung derartiger Koppelnetze wird jedoch angesehen, daß die vorhandene Schaltungsstruktur, von der bei der eingangs betrachteten Schaltungsanordnung ausgegangen wird, völlig zu verändern wäre.

Es ist ferner ein Digital-Vermittlungssystem mit verteilter Steuerung bekannt ("Der Fernmelde-Ingenieur", Heft 6, Juni 1984), bei dem ein aus einzelnen Koppelblöcken bestehendes Koppelnetz verwendet wird. Bei Erweiterung des Vermittlungssystems sind entsprechende Koppelstufen vorzusehen. Von Nachteil dabei ist, daß in Abhängigkeit vom Belastungszustand des Vermittlungssystems für die jeweilige Verbindung unterschiedliche Laufzeiten innerhalb des Vermittlungssystems auftreten können.

Der Erfindung liegt die Aufgabe zugrunde, die eingangs angegebene Schaltungsanordnung so weiterzubilden, daß die Anschlußmöglichkeiten für die einzelnen Anschlußschaltungen erweitert sind und daß überdies die Vermittlungskapazität den jeweils gewünschten Verhältnissen entsprechend erweiterbar ist.

Gelöst wird die vorstehend aufgezeigte Aufgabe durch die im Patentanspruch 1 gekennzeichneten Maßnahmen.

Die Erfindung bringt den Vorteil mit sich, daß die Anschlußmöglichkeiten für die einzelnen Anschlußschaltungen gegenüber der eingangs betrachteten bekannten Schaltungsanordnung erheblich erweitert sind. Erreicht wird dies praktisch durch eine Mehrstufigkeit des verwendeten Bussystems, in das die Ringleitungsanordnung stets einbezogen ist.

Bei Ausgestaltung der Erfindung in der im Anspruch 2 angegebenen Weise ergibt sich der Vorteil, daß eine taktsynchrone Verarbeitung der einzelnen Binärsignale auf relativ einfache Weise sichergestellt ist.

Bei Ausgestaltung der Erfindung in der im Anspruch 3 angegebenen Weise ergibt sich der Vorteil eines insgesamt relativ geringen schaltungstechnischen Aufwands, um die taktsynchrone Verarbeitung der den einzelnen Gruppenkopplern zuzuführenden bzw. von diesen her aufzunehmenden Binärsignale zu gewährleisten.

Bei Ausgestaltung der Erfindung in der im Anspruch 4 angegebenen Weise ergibt sich der Vorteil einer praktisch leitungslängen unabhängigen taktsynchronen Verarbeitung der den einzelnen Gruppenkopplern zuzuführenden bzw. von diesen her aufzunehmenden Binärsignale.

Bei Ausgestaltung der Erfindung in der im Anspruch 5 angegebenen Weise ergibt sich der Vorteil, daß mit insgesamt relativ geringem schaltungstechnischen Aufwand die Vermittlungskapazität auf der Ringleitungsanordnung und damit der Gesamtanlage erheblich erweitert werden kann, indem eine entsprechende Anzahl von Ringleitungen für die Ringleitungsanordnung vorgesehen wird. Dieser Vorteil wird besonders deutlich, wenn man eine nachträgliche Kapazitätserweiterung der Anlage in Betracht zieht.

Bei Ausgestaltung der Erfindung in der im Anspruch 6 gekennzeichneten Weise ergibt sich der Vorteil eines insgesamt besonders geringen schaltungstechnischen Aufwands hinsichtlich der Realisierung der Hauptkoppler.

Bei Anwendung der Maßnahmen gemäß dem Anspruch 7 ergibt sich der Vorteil eines sicheren Betriebs der gesamten Schaltungsanordnung bei einer nennenswerten Länge der jeweiligen Ringleitung. Wie weiter unten noch ersichtlich werden wird, kann die Länge der jeweiligen Ringleitung bei den üblichen PCM-Signalfrequenzen bis zu 40 m betragen.

Bei Ausgestaltung der Erfindung in der im Anspruch 8 gekennzeichneten Weise ergibt sich der Vorteil eines insgesamt besonders geringen schaltungstechnischen Aufwands bei einer alternativen Realisierung der Hauptkoppler.

Bei Ausgestaltung der Erfindung in der im Anspruch 9 gekennzeichneten Weise ergibt sich der Vorteil eines insgesamt besonders geringen Aufwands für die Realisierung der Raum-Zeit-Stufen in den Hauptkoppler.

Die Ausgestaltung der Erfindung in der im Anspruch 10 gekennzeichneten Weise bringt den Vor

teil besonders einfach aufzubauender Parallel-Serien- und Serien-Parallel-Umsetzeinrichtungen mit sich.

Anhand von Zeichnungen wird die Erfindung nachstehend beispielsweise näher erläutert.

Fig. 1    zeigt ein Ausführungsbeispiel der Schaltungsanordnung gemäß der Erfindung.

Fig. 2    zeigt eine Modifikation von bei der Schaltungsanordnung gemäß Fig. 1 verwendeten Hauptkopplern.

Fig. 3    veranschaulicht in einem Impulsdiagramm den Verlauf von Impulsen an verschiedenen Schaltungspunkten bei der Schaltungsanordnung gemäß Fig. 1.

Fig. 4    veranschaulicht in einem Impulsdiagramm den Verlauf von Impulsen an verschiedenen Schaltungspunkten bei der in Fig. 2 dargestellten Schaltungsanordnung.

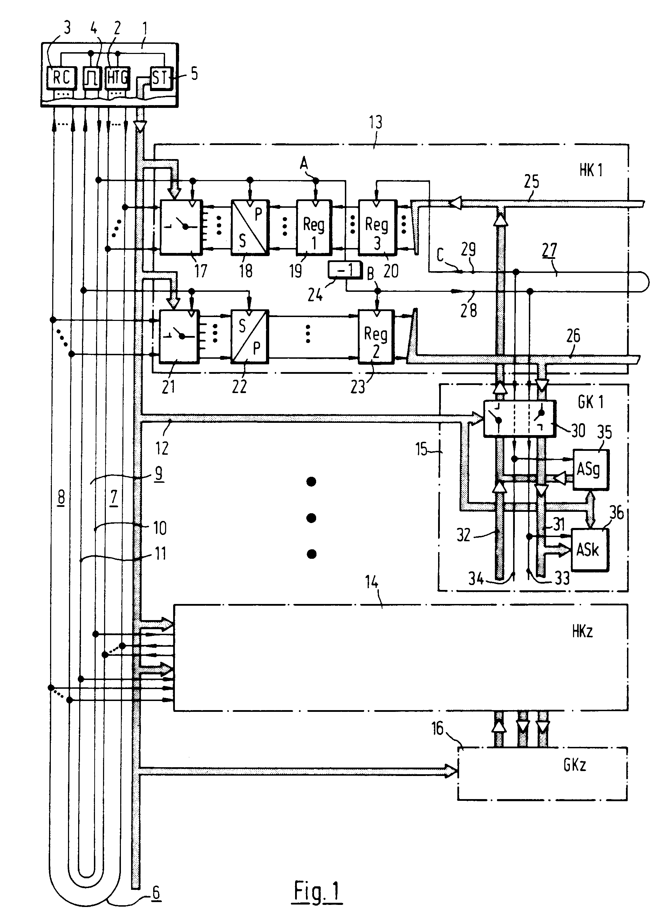

Die in Fig. 1 dargestellte Schaltungsanordnung weist eine zentrale Steuereinrichtung 1 auf, welche - wie die eingangs betrachtete bekannte Schaltungsanordnung - Hörtongeneratoren (HTG) 2, Empfangseinrichtungen (RC) 3, eine Takt- und Synchronisiersignale abgebende Taktimpulsquelle 4 und eine Zeitkanal-Zuteilungsschaltung 5 enthält, welche die für die Verbindungen jeweils benutzten Zeitkanäle bzw. Zeitfächer innerhalb von zyklisch wiederholt auftretenden Impulsrahmen den einzelnen Einrichtungen zuteilt. Die betreffenden Einrichtungen 2 bis 5 können, wie in Fig. 1 angedeutet, über eine Leitungsanordnung miteinander verbunden sein.

Mit der zentralen Steuereinrichtung 1 ist eine Ringleitungsanordnung 6 verbunden, die eine Mehrzahl von einzelnen Ringleitungen enthält, wie beispielsweise acht einzelne Ringleitungen, welche jeweils einen ersten Leitungsabschnitt 7 und einen damit verbundenen zweiten Leistungsabschnitt 8 enthalten. Die einzelnen Ringleitungen der Ringleitungsanordnung 6 sind so betrieben, daß auf ihnen in zyklisch wiederholt aufeinanderfolgenden Pulsrahmen jeweils eine bestimmte Anzahl P (z.B. 32) Zeitfächern mit jeweils n (=8) Bits festgelegt ist. Dies entspricht üblichen Werten einer 2,048-MHz-PCM-Übertragungsleitung. Die Hörtongeneratoren 2 können mit den Empfangseinrichtungen 3 die gleichen Aufgaben übernehmen wie die entsprechenden Einrichtungen bei der eingangs betrachteten bekannten Schaltungsanordnung. Die Anzahl der Ringleitungen und/oder der pro Pulsrahmen auftretenden Zeitfächer kann bei Forderung nach höherer Verkehrsleistung größer als zuvor angegeben sein.

Neben der vorstehend betrachteten zentralen Ringleitungsanordnung 6 ist gemäß Fig. 1 eine zentrale Taktringleitung 9 vorgesehen, die einen ersten Leitungsabschnitt 10 und einen damit verbundenen zweiten Leitungsabschnitt 11 aufweist. Der Leitungsabschnitt 10 dieser zentralen Taktringleitung nimmt die von der Taktimpulsquelle 4 abgegebenen Taktimpulse auf, und der Leitungsabschnitt 11 gibt die betreffenden Taktimpulse an eine Signalsenke bzw. Überwachungsschaltung in der Taktimpulsquelle 4 ab. Die betreffende zentrale Taktringleitung 9 ist mit ihren Ringleitungsabschnitten 10 und 11 den Leitungsabschnitten 7 bzw. 8 der zentralen Ringleitungsanordnung 6 zugeordnet, und zwar vorzugsweise sogar topologisch. Dadurch ist sichergestellt, daß auf den jeweils einander zugeordneten Leitungsabschnitten auftretende Signale die gleichen Ausbreitungsgeschwindigkeiten haben.

Neben den zuvor betrachteten Leitungsanordnungen ist gemäß Fig. 1 noch eine Busleitung 12 vorgesehen, über die von der Zeitkanal- bzw. Zeitfach-Zuteilungsanordnung 5 den einzelnen zu steuernden Einrichtungen Informationen über die jeweils zu benutzenden Zeitfächer bzw. Zeitkanäle übermittelt werden. Hierauf wird weiter unten noch eingegangen werden.

Zu der in Fig. 1 dargestellten Schaltungsanordnung gehören ferner Hauptkoppler (HK1 bis HKz) 13,14 die in einer Mehrzahl, wie z.B. achtfach, vorgesehen sein können und die an verschiedenen Stellen der Leitungsabschnitte der zentralen Ringleitungsanordnung 6 und der zentralen Taktringleitung 9 angeschlossen sind. An jedem der Hauptkoppler 13,14 ist gemäß Fig. 1 jeweils zumindest eine Gruppenkoppeleinrichtung (GK1, GKz) 15 bzw. 16 angeschlossen, die jeweils einen Gruppenkoppler enthält. Bei diesen Gruppenkoppeleinrichtungen kann es sich um Anschlußgruppen handeln, wie sie bei der eingangs betrachteten bekannten Schaltungsanordnung über Gruppenkoppler an der dort vorgesehenen Ringleitung angeschlossen sind.

Nunmehr sei der Hauptkoppler 13 näher betrachtet. Er weist zwei Raum-Zeit-Stufen 17,21 auf, die vorzugsweise jeweils aus integrierten Speicher-Zeit-Schalteranordnungen aufgebaut sein können, wie sie kommerziell (z.B.)unter der Handelsbezeichnung PEB 2070 von der Fa. Siemens AG erhältlich sind. Die Raum-Zeit-Stufe 17 ist ausgangsseitig an den Leitungsabschnitten 7 der zentralen Ringleitungsanordnung 9 angeschlossen. Eingangsseitig ist die betreffende Stufe 17 an x (x≤n)Ausgängen einer Parallel-Serien-Umsetzeinrichtung 18 angeschlossen, die eingangsseitig am Ausgang eines ersten Registers (Reg1) 19 angeschlossen ist. Dieses Register 19 ist eingangsseitig mit den Ausgängen eines weiteren Registers (Reg3) 20 verbunden, welches eingangsseitig mit dem Leitungsabschnitt 25 einer Hauptschiene verbunden ist, die neben dem betreffenden Leitungsabschnitt 25 noch einen weiteren Leitungsabschnitt 26 für jeweils gerichtet zu übertragene Binärsignale enthält.

Die andere, bereits erwähnte Raum-Zeit-Stufe 21 ist eingangsseitig mit den Leitungsabschnitten 8 der zentralen Ringleitungsanordnung 6 verbunden. Ausgangsseitig ist die Stufe 21 mit $x(x \leq n)$ Eingängen einer Serien-Parallel-Umsetzeinrichtung 22 verbunden, welche ausgangsseitig mit den Eingängen eines weiteren Registers (Reg2) 23 verbunden ist. Dieses Register 23 ist ausgangsseitig mit dem erwähnten anderen Leitungsabschnitt 25 der Hauptschiene verbunden.

Diese, die Leitungsabschnitte 25 und 26 umfassende Hauptschiene ist dem Hauptkoppler 13 zugehörig.

Die Raum-Zeit-Stufen 17 und 21 des Hauptkopplers 13 sind mit Steuereingängen an der erwähnten Busleitung 12 angeschlossen. Über diese Busleitung 12 erhalten die Raum-Zeit-Stufen 17,21 Einstellinformationen bezüglich der Zeitkanäle bzw. Zeitfächer, die innerhalb von zyklisch wiederholt auftretenden Pulsrahmen für ihre Verbindung mit der zentralen Ringleitungsanordnung 6 zu verwenden sind, und bezüglich der räumlichen Signalweiterleitung.

Die Raum-Zeit-Stufe 17, die Parallel-Serien-Umsetzeinrichtung 18 und das Register 19 sind mit Takteingängen an dem Leitungsabschnitt 10 der zentralen Taktringleitung 9 angeschlossen. Über einen Inverter 24 ist die betreffende Taktleitung mit dem Takteingang des erwähnten Registers 23 verbunden.

Die Takteingänge der Raum-Zeit-Stufe 21 und der Serien-Parallel-Umsetzeinrichtung 22 sind an dem Leitungsabschnitt 11 der zentralen Taktringleitung 9 angeschlossen.

Mit dem Ausgang des Invertierungsgliedes 24 ist ferner der eine Leitungsabschnitt 28 einer weiteren Taktringleitung 27 verbunden, die mit einem Leitungsabschnitt 29 am Takteingang des erwähnten Registers 20 angeschlossen ist. Die erwähnte weitere Taktringleitung 27 ist der Hauptschiene mit den beiden Leitungsabschnitten 25,26 zugeordnet; sie kann mit ihren beiden Leitungsabschnitten 28, 29 genauso verlegt sein wie die beiden Leitungsabschnitte 26 bzw. 25 der betrachteten Hauptschiene.

An der die Leitungsabschnitte 25,26 umfassenden Hauptschiene und an der weiteren Taktringleitung 27 ist gemäß Fig. 1 die Gruppenkoppeleinrichtung 15 über einen Gruppenkoppler 30 angeschlossen, der auf seiner anderen Anschlußseite Gruppenschienen 31,32 sowie Taktleitungen 33 bzw. 34 aufweist. An der Gruppenschiene 32 und der Taktleitung 34, die mit dem Taktleitungsabschnitt 29 direkt verbunden sein kann, ist gemäß Fig. 1 eine Anschlußschaltung (ASg) 35 angeschlossen, die Binärsignale abzugeben hat. An der Gruppenschiene 31 und der Taktleitung 33, die mit dem Taktleitungsabschnitt 28 direkt verbunden sein kann, ist eine Anschlußschaltung (ASk) 36 angeschlossen, die Binärsignale aufzunehmen vermag. Die beiden Anschlußschaltungen 35,36 und der Gruppenkoppler 30 sind mit Einstelleingängen an der oben erwähnten Busleitung 12 angeschlossen. Die beiden Anschlußschaltungen 35,36 können zu ein und derselben Teilnehmerschaltung bzw. Übertragungseinrichtung gehören. Sie sind insgesamt in einer Mehrzahl vorgesehen.

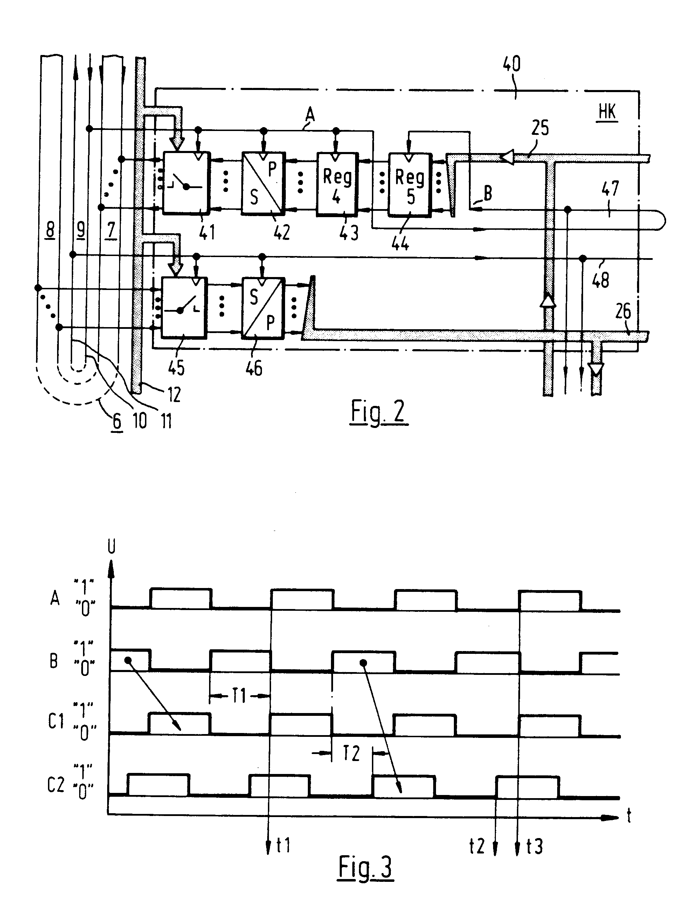

Bevor auf die Arbeitsweise der in Fig. 1 dargestellten Schaltungsanordnung eingegangen wird, sei zunächst auf die in Fig. 2 dargestellte Modifikation des in Fig. 1 näher gezeigten Hauptkopplers eingegangen. Der in Fig. 2 dargestellte Hauptkoppler(HK) 40 weist zwei Raum-Zeit-Stufen 41,45 auf, die entsprechend den Raum-Zeit-Stufen 17,21 gemäß Fig. 1 an der zentralen Ringleitungsanordnung 6 angeschlossen sind. Die Raum-Zeit-Stufe 41 ist eingangsseitig mit der Ausgangsseite einer Parallel-Serien-Umsetzeinrichtung 42 verbunden, die ihrerseits eingangsseitig am Ausgang eines Registers (Reg4) 43 angeschlossen ist. Dieses Registers 43 ist eingangsseitig am Ausgang eines weiteren Registers (Reg5) 44 angeschlossen, welches eingangsseitig an dem Leitungsabschnitt 25 der im Zusammenhang mit Fig. 1 bereits erwähnten Hauptschiene angeschlossen ist, zu der ferner der Leitungsabschnitt 26 gehört. Mit diesem Leitungsabschnitt 26 ist gemäß Fig. 2 der Ausgang einer Serien-Parallel-Umsetzeinrichtung 46 verbunden, die eingangsseitig am Ausgang der erwähnten Raum-Zeit-Stufe 45 angeschlossen ist.

Im Unterschied zu den in Fig. 1 dargestellten Verhältnissen ist bei der in Fig. 2 dargestellten Schaltungsanordnung mit der mit den Takteingängen der Raum-Zeit-Stufe 41, der Parallel-Serien-Umsetzeinrichtung 42 und des Registers 43 verbundenen Taktanschlußleitung der Signaleingang einer weiteren Taktringleitung 47 verbunden, die ausgangsseitig mit dem Takteingang des erwähnten Registers 44 verbunden ist; sie kann mit ihren beiden Leitungsabschnitten genauso verlegt sein wie die beiden Leitungsabschnitte 25,26 der Hauptschiene. Ferner ist die mit den Takteingängen der Raum-Zeit-Stufe 45 und der Serien-Parallel-Umsetzeinrichtung 46 verbundene Taktleitung als Taktleitung 48 weitergeführt. Die auf der weiteren Taktringleitung 47 - und zwar auf deren rückführenden Leitungsabschnitt - auftretenden Taktimpulse und die auf der Taktleitung 48 auftretenden Taktimpulse werden der jeweiligen Gruppenkoppeleinrichtung zugeführt, welche mit dem Hauptkoppler 40 verbunden ist.

Im folgenden wird auf die Arbeitsweise der in Fig. 1 und 2 dargestellten Schaltungsanordnungen eingegangen. Zunächst sei jedoch im Zusammenhang mit Fig. 1 darauf hingewiesen, daß die einzelnen Gruppenkoppeleinrichtungen, wie die Gruppenkoppeleinrichtung 15, so aufgebaut sind, daß die Leitungsabschnitte ihrer Gruppenschienen, wie die Leitungsabschnitte 31 und 32 jeweils beispielsweise $n = 8$ Einzelleitungen umfassen, auf denen jeweils zu einem Binärsignal bzw. PCM-Wort gehörende 8 Bits parallel auftreten. Dabei ist vorgesehen, daß innerhalb zyklisch wiederholt mit einer Rate von $125\mu s$ auftretenden Pulsrahmen auf den einzelnen Leitungsabschnitten 31,32 jeweils $m \cdot n = 256$ Zeitschlitze festgelegt sind, womit je Gruppenkoppeleinrichtung 256 verschiedene Zeitschlitze bzw. Zeitfächer in abgehender Übertragungsrichtung und 256 Zeitschlitze bzw. Zeitfächer in ankommender Übertragungsrichtung zur Verfügung stehen.m ist hier 32.

Die auf den einzelnen Leitungen des Leitungsabschnitts 32 der Gruppenschiene der Gruppenkoppeleinrichtung 15 auftretenden Binärsignale werden einer entsprechenden Anzahl (8) von Eingängen des Registers 20 zugeführt. Mit diesem Register 20 werden die aufeinanderfolgend auftretenden Binärsignale durch Taktsteuerung übernommen. Sodann gelangen die betreffenden Binärsignale in das Register 19, von dem sie über die Parallel-Serien-Umsetzeinrichtung 18 nacheinander verschiedenen (z.B.8) Eingängen der Raum-Zeit-Stufe 17 zugeführt werden. Dabei kann so vorgegangen sein, daß die Parallel-Serien-Umsetzeinrichtung 18 nacheinander von verschiedenen Ausgängen den ihr eingangsseitig zugeführten parallelen Binärsignalen entsprechende serielle Binärsignale abgibt. Diese mit ihren Bits seriell auftretenden Binärsignale bzw. PCM-Signale werden über die Raum-Zeit-Stufe einem Leitungsabschnitt 7 einer Ringleitungen der zentralen Ringleitungsanordnung 7 zugeführt. Dabei erfolgt in der Stufe 17 eine räumliche und eine zeitliche Umsetzung des dieser jeweils zugeführten Binärsignals bzw. PCM-Signals. Das von der Raum-Zeit-Stufe 17 abgegebene Binärsignal bzw. PCM-Signal tritt dann als beispielsweise 8 Bits umfassendes Signal in einem Zeitfach von beispielsweise 32 Zeitfächern in einem Pulsrahmen auf, der auf der betreffenden Ringleitung der zentralen Ringleitungsanordnung 6 maßgebend ist.

Die auf den Leitungsabschnitten 8 der einzelnen Ringleitungen - deren Anzahl beispielsweise 8 betragen kann - der zentralen Ringleitungsanordnung 6 seriell auftretenden Bits von Binärsignalen bzw. PCM-Signalen werden zu den festgelegten Zeitpunkten von den der Raum-Zeit-Stufe 21 entsprechenden Zeitstufen der Hauptkoppler aufgenommen. Die von der Raum-Zeit-Stufe 21 aufgenommenen Binärsignale gelangen von dieser zu einzelnen (z.B.8) Eingängen der mit dieser verbundenen Serien-Parallel-Umsetzeinrichtung 22 hin, welche daraufhin über beispielsweise acht Parallelleitungen die in Parallelform umgesetzten Binärsignale an das Register 23 weiterleitet, von dem dann die betreffenden Binärsignale an den Leitungsabschnitt 26 der zugehörigen Hauptschiene weitergeleitet werden.

Bei der in Fig. 2 dargestellten Schaltungsanordnung laufen den vorstehend im Zusammenhang mit Fig. 1 erläuterten Vorgängen prinzipiell völlig entsprechende Vorgänge ab. Der einzige, wesentliche Unterschied der in Fig. 2 dargestellten Schaltungsanordnung zu der in Fig. 1 dargestellten Schaltungsanordnung besteht lediglich darin, daß die in Fig. 2 dargestellte Schaltungsanordnung ohne ein dem Register 23 und Inverter 24 gemäß Fig. 1 entsprechendes Register auskommt.

Gemeinsam für die in Fig. 1 und 2 dargestellten Schaltungsanordnungen ist, daß auf den Leitungsabschnitten 25,26 der jeweiligen Hauptschiene die Binärsignale bzw. PCM-Signale parallel übertragen werden und daß sie auf den Leitungsabschnitten 7, 8 der einzelnen Ringleitungen der zentralen Ringleitungsanordnung 6 als serielle Binärsignale bzw. PCM-Signale auftreten. Betrachtet man in diesem Zusammenhang eine Verbindung von einer Binärsignale bzw. PCM-Signale abgebenden Anschlußschaltung, wie der Anschlußschaltung 35, zu einer solche Signale aufnehmenden Anschlußschaltung, wie der Anschlußschaltung 36, so stellt sich die erläuterte Schaltungsanordnung als eine Vermittlungsschaltungsanordnung dar, bei der zunächst eine Zeitstufe vorliegt (in der die Anschlußschaltung 35 umfassenden Gruppenkoppeleinrichtung 15), daß sodann eine Raum- und Zeit-Stufe (in der Stufe 17) folgt, daß danach eine Raum-Zeit-Stufe (in der Stufe 21) folgt und daß schließlich wieder eine Zeit-Stufe in der Gruppenkoppeleinrichtung 15 mit der Anschlußschaltung 36 folgt. Insgesamt werden dabei drei verschiedene Zeitfächer bzw. Zeitkanäle benötigt: Ein Zeitfach bzw. Zeitkanal auf dem Leitungsabschnitt 32 bzw. 25, ein Zeitfach bzw. Zeitkanal auf einer der Ringleitungen der zentralen Ringleitungsanordnung 6 und ein Zeitfach bzw. Zeitkanal auf dem Leitungsabschnitt 26 bzw. 31.

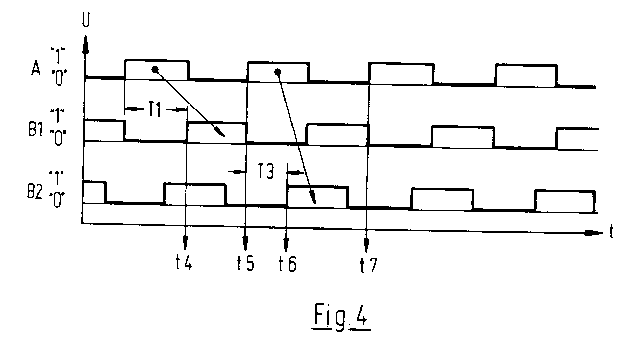

Bei der vorstehend betrachteten Arbeitsweise der in Fig. 1 und 2 dargestellten Schaltungsanordnungen sind die Verhältnisse bezüglich der Taktsteuerung der einzelnen Einrichtungen vereinfachend außer Betracht gelassen worden. Die betreffenden Taktverhältnisse sind in Fig. 3 und 4 veranschaulicht. Die Fig. 3 und 4 veranschaulichen dabei den zeitlichen Verlauf (t) von Taktsignalspannungen (U) an verschiedenen Schaltungspunkten A, B und C in Fig. 1 bzw. A und B in Fig. 2.

Fig. 3 zeigt in der mit A bezeichneten Zeile den Verlauf der am Schaltungspunkt A gemäß Fig. 1 auftretenden Taktimpulse, die mit einer Folgefrequenz von 2,048 MHz auftreten mögen. Dies bedeutet, daß die Periodendauer dieser Impulse etwa 488 ns beträgt. In der Zeile B zeigt Fig. 3 den Verlauf der am Schaltungspunkt B gemäß Fig. 1 auftretenden Taktimpulse. In der Zeile C1 sind die am Schaltungspunkt C gemäß Fig. 1 für den Fall auftretenden Taktimpulse veranschaulicht, daß der Taktringleitung 27 eine solche Länge gegeben ist, daß eine Taktimpulsverzögerung um t1 von etwa 244 ns erfolgt. Mit C2 sind in Fig. 3 Taktimpulse bezeichnet, die an dem Schaltungspunkt C gemäß Fig. 1 in dem Fall auftreten, daß die Taktringleitung 27 kürzer ist als in dem zuvor betrachteten Falle. Die Wirkungen der betreffenden Verzögerungen sind in Fig. 3 durch Pfeile zwischen den entsprechenden Impulsfolgen veranschaulicht.

Aus Fig. 3 geht hervor, daß zwischen den in den Zeilen B und C1 dargestellten Impulsfolgen eine Phasenverschiebung von 180° bzw. eine Zeitverschiebung von T1 von ca. 244 ns liegt. Zwischen den in den Zeilen B und C2 dargestellten Impulsfolgen liegt eine Phasenverschiebung entsprechend einer Zeitspanne T2, die kleiner ist als die Zeitspanne T1. Geht man von einer Laufzeit von 6 ns/m bei den verwendeten Übertragungsleitungen aus, so bedeutet dies im Fall B/C1 eine maximale Länge von ca. 40 m für die Taktringleitung 27. An dieser Stelle sei angemerkt, daß die zentrale Taktringleitung 9 und damit die zentrale Ringleitungsanordnung 6 gemäß Fig. 1 eine entsprechende Länge aufweisen werden.

Wenn man - wie dies aus Fig. 3 hervorgeht - berücksichtigt, daß die Vorderflanken der an den einzelnen Schaltungspunkten A, B, C auftretenden Taktimpulse zur Taktsteuerung der einzelnen Einrichtungen dienen, dann ergibt sich aus Fig. 3, daß bei Vorliegen von Verhältnissen entsprechend den Zeilen A und C1 eine gleichzeitige Übernahme (t1) der auf dem Leitungsabschnitt 25 der Hauptschiene auftretenden Binärsignale durch das Register 20 und das Register 19 erfolgt, während bei Vorliegen der Verhältnisse entsprechend den Zeilen A und C2 gemäß Fig. 3 zunächst eine Übernahme der auf dem Leitungsabschnitt 25 auftretenden Binärsignale durch das Register 20 (Zeitpunkt t2) und sodann eine Übernahme durch das Register 19 (Zeitpunkt t3) erfolgt. Dadurch sind also Phasendifferenzen zwischen den Takten ausgeglichen, die auf der zentralen Taktringleitung 9 und der (dezentralen) weiteren Taktringleitung 27 maßgebend sind. Damit sind zugleich entsprechende Phasenunterschiede zwischen den Binärsignalen ausgeglichen, die auf der zentralen Ringleitungsanordnung 6 und auf den einzelnen Leitungsabschnitten der Hauptschienen und den mit diesen kurz verbundenen Gruppenschienen auftreten.

In Fig. 4 sind den zuvor erläuterten Verhältnissen entsprechende Verhältnisse bezüglich der in Fig. 2 dargestellten Schaltungsanordnung veranschaulicht. Dabei veranschaulichen die in den Zeilen A und B1 gemäß Fig. 4 gezeigten Impulsverläufe den Fall, daß die am Schaltungspunkt B gemäß Fig. 2 auftretenden Taktimpulse gegenüber den am dortigen Schaltungspunkt A auftretenden Taktimpulsen in der Phase um 180° (T1 ist nahezu gleich 244 ns) verschoben sind, was durch einen entsprechenden Pfeil angedeutet ist. In der Zeile B2 sind die am Schaltungspunkt B gemäß Fig. 2 auftretenden Taktimpulse für den Fall veranschaulicht, daß mit einer kürzeren Laufzeit (siehe Pfeil) für die auf der Taktringleitung 47 gemäß Fig. 2 auftretenden Taktimpulse zu rechnen ist. Diese Laufzeit ist in Fig. 4 mit T3 bezeichnet.

Aus Fig. 4 ergibt sich somit folgendes: Wenn die auf der Taktringleitung 47 gemäß Fig. 2 auftretenden Taktimpulse eine Verzögerung gegenüber dem am Schaltungspunkt A auftretenden Taktimpulsen von T1 erfahren, dann werden die auf dem Leitungsabschnitt 25 der Hauptschiene des Hauptkopplers 40 auftretenden Binärsignale zu einem Zeitpunkt t4 in dem Register 44 übernommen und zu einem Zeitpunkt t5 von dem nachgeschalteten Register 43 übernommen. Wenn die Verzögerungszeit zwischen den am Schaltungspunkt B und den am Schaltungspunkt A gemäß Fig. 2 auftretenden Taktimpulsen die Dauer von T3 hat, dann werden die auf dem Leitungsabschnitt 25 gemäß Fig. 2 auftretenden Binärsignale zu einem Zeitpunkt t6 in dem Register 44 aufgenommen und zu einem Zeitpunkt t7 von dem Register 43 übernommen. Auch in diesem Falle ist ein Ausgleich von Phasendifferenzen zwischen den Takten erreicht, die auf der zentralen Taktringleitung 9 und der Taktringleitung 47 maßgebend sind. Damit sind auch in diesem Falle Laufzeitprobleme gelöst, wie sie bei der in Fig. 1 dargestellten Schaltungsanordnung gelöst worden sind.

Im Zusammenhang mit den Fig. 3 und 4 sei noch angemerkt, daß im Falle der Ausführungsform nach Fig. 1 die Ringleitungen der zentralen Ringleitungsanordnung 6 und die Taktringleitung 27 bei einer Laufzeit von 6 ns/m jeweils eine Länge von maximal ca. 40 m haben können, und daß bei der Ausführungsform nach Fig. 2 die Längen der Ringleitungen und der Taktleitungen praktisch keine Rolle spielen, um stets einen einwandfreien Betrieb im Zusammenhang mit dem jeweiligen Hauptkoppler und der mit diesen verbundenen Hauptschiene zu gewährleisten. Bei den angenommenen Laufzeiten auf den einzelnen Leitungen werden die Leitungen der zentralen Ringleitungsanordnung und der zentralen Taktringleitung entsprechende Längen aufweisen.

Wie eingangs erwähnt, werden über die in Fig. 1 und 2 angedeutete Busleitung 12 von der Zeitkanal- bzw. Zeitfach-Zuteilungsanordnung 5 den einzelnen zu steuernden Einrichtungen Informationen über die jeweils zu benutzenden Zeitfächer bzw. Zeitkanäle übermittelt. Um diese Informationen übermitteln zu können, benötigt die Zeitkanal- bzw. Zeitfach-Zuteilungsanordnung 5 zunächst entsprechende Angaben. Dazu ermittelt die zentrale Steuereinrichtung 1 über gesonderte (nicht näher dargestellte) Abfragekanäle Verbindungswünsche von jeweils rufenden Anschlußstellen. Im Rahmen dieser Ermittlung werden sowohl die rufenden Anschlußstellen als auch die anzurufenden Anschlußstellen bzw. die diese Anschlußstellen bezeichnenden Adressen festgehalten. Diese Angaben werden dann zusammen mit Angaben über die der jeweiligen Verbindung zugeteilten Zeitfächer bzw. Zeitkanäle in Zuordnungstabellen gespeichert, deren Inhalt dann zur Ansteuerung der einzelnen Einrichtungen über die Busleitung 12 dient. Die somit erforderliche Abfrageeinrichtung und die erwähnten Zuordnungstabellen können somit Bestandteil der Zeitkanal- bzw. Zeitfach-Zuteilungsanordnung 5 sein.

Abschließend sei noch angemerkt, daß die vorliegende Erfindung zwar anhand von Schaltungsanordnungen erläutert worden ist, bei denen die Binärsignale bzw. PCM-Signale seriell über einzelne Ringleitungen der zentralen Ringleitungsanordnung 6 übertragen werden. Es ist jedoch darauf hinzuweisen, daß der Gegenstand vorliegender Erfindung auch ohne eine solche serielle Übertragung der Binärsignale bzw. PCM-Signale auskommen kann, wenn die Parallel-Serien- und Serien-Parallel-Umsetzeinrichtungen weggelassen sind.

**Patentansprüche**

1. Schaltungsanordnung zum vermitteln von jeweils eine vorgegebene Anzahl n (z.B. 8) von Bits aufweisenden Binärsignalen, insbesondere PCM-Signalen, die mit einer festgelegten Übertragungsrate (z.B. 8 kbit/s) auftreten und die von/zu Anschlußschaltungen (35, 36) zu übertragen sind, welche jeweils an einer Gruppenschiene (31, 32) einer Mehrzahl von Gruppenschienen angeschlossen sind, auf deren jeder Binärsignale parallel in insgesamt m • n Zeitfächern zyklisch wiederholt in Pulsrahmen übertragbar sind, wobei m eine vorgegebene ganze Zahl (z.B. 32) und n die Anzahl der zu einem Binärsignal gehörenden Bits bedeuten, und mit einer eine Mehrzahl von einzelnen Ringleitungen umfassenden Ringleitungsanordnung (6), deren Ringleitungen jeweils einen ersten Leitungsabschnitt (7) und einen mit diesem verbundenen zweiten Leitungsabschnitt (8) aufweisen und an deren beide Leitungsabschnitte (7, 8) die Gruppenschienen (31, 32) über Gruppenkoppler (30) anschaltbar sind, dadurch **gekennzeichnet,** daß jeder Gruppenkoppler (30) an zwei zur Übertragung von Binärsignalen in unterschiedlichen Richtungen dienenden Leitungsabschnitten (25, 26) eines Raum-Zeit-Stufen (17, 21) enthaltenden Hauptkopplers (13; 14) angeschlossen ist, der einem ersten Leitungsabschnitt (7) der Ringleitungsanordnung (6) Binärsignale über eine Raum-Zeit-Stufe (17) zuführt und von einem zweiten Leitungsabschnitt (8) Binärsignale über eine weitere Raum-Zeit-Stufe (21) empfängt.

2. Schaltungsanordnung nach Anspruch 1, **dadurch gekennzeichnet,** daß die Ringleitungsanordnung (6) eine zentrale Taktringleitung (9) aufweist, die einen den ersten Leitungsabschnitten (7) der Ringleitungsanordnung (6) zugeordneten, an einer Taktimpulsquelle (4) angeschlossenen, Takt- und Synchronisierimpulse führenden ersten Leitungsabschnitt (10) und einen mit diesem verbundenen zweiten Leitungsabschnitt (11) aufweist, der den zweiten Leitungsabschnitten (8) der Ringleitungsanordnung (6) zugeordnet ist,
und daß die Gruppenkoppler (30) und die Hauptkoppler (13;14) über gesonderte Taktleitungen (28,29,33,34;47, 48) mit den beiden Leitungsabschnitten (10,11) der zentralen Taktringleitung (9) verbunden sind.

3. Schaltungsanordnung nach Anspruch 2, **dadurch gekennzeichnet,** daß mit dem ersten Leitungsabschnitt (10) der zentralen Taktringleitung (9) je Hauptkoppler (13;14) der Eingangsanschluß einer weiteren Taktringleitung (27) verbunden ist, die mit ihren Leitungsabschnitten (28,29) den Leitungsabschnitten (25,26) der mit dem betreffenden Hauptkoppler (13 bzw. 14) verbundenen Hauptschienen (25,26) zugehörig ist und deren beide Leitungsabschnitte (28,29) über den mit dem betreffenden Hauptkoppler (13;14) jeweils verbundenen Gruppenkoppler (30) mit zu den zugehörigen Anschlußschaltungen (35,36) hinführenden Taktleitungen (33,34) verbunden sind.

4. Schaltungsanordnung nach Anspruch 2, **dadurch gekennzeichnet,** daß mit dem ersten Leitungsabschnitt (10) der zentralen Taktringleitung (9) je Hauptkoppler (40) der Eingangsanschluß einer weiteren Taktringleitung (47) verbunden ist, die einen Taktimpulse zuführenden Leitungsabschnitt und einen Taktimpulse zurückführenden Leitungsabschnitt aufweist, mit welchem über den mit dem betreffenden Hauptkoppler (40) jeweils verbundenen Gruppenkoppler eine Taktleitung verbunden ist, die zu den zugehörigen, Binärsignale abgebenden Anschlußschaltungen hinführt, und daß mit dem zweiten Leitungsabschnitt (11) der zentralen Taktringleitung (9) je Hauptkoppler (40) außerdem eine gesonderte Taktleitung (48) verbunden ist, die über den mit dem betreffenden Hauptkoppler (40) jeweils verbundenen Gruppenkoppler mit den zugehörigen, Binärsignale aufnehmenden Anschlußschaltungen verbunden ist.

5. Schaltungsanordnung nach einem der Ansprüche 1 bis 4, **dadurch gekennzeichnet,** daß über jede Ringleitung der Ringleitungsanordnung (6) in zyklisch wiederholt auftretenden Pulsrahmen jeweils n Bits umfassende Binärsignale in p (z.B. 32) aufeinanderfolgenden Zeitfächern von dem ersten Leitungsabschnitt (7) zu dem zweiten Leitungsabschnitt (8) übertragbar sind, wobei p eine vorgegebene ganze Zahl ist,
und daß jeder Gruppenkoppler (10) mit seinem Binärsignale in abgehender Übertragungsrichtung übertragenden Kopplerteil über eine eine Parallel-Serien-Umsetzeinrichtung (18) und eine Raum-Zeit-Stufe (17) umfassende Vermittlungseinrichtung eines Hauptkopplers (13;14) an den ersten Leitungsabschnitten (7) sämtlicher Ringleitungen und mit seinem Binärsignale in ankommender Übertragungsrichtung übertragenden Kopplerteil über eine eine Raum-Zeit-Stufe (21) und eine Serien-Parallel-Umsetzeinrichtung (22) umfassende Vermittlungseinrichtung des Hauptkopplers (13;14) an den zweiten Leitungsabschnitten (8) sämtlicher Ringleitungen der Ringleitungsanordnung (6) angeschlossen ist.

6. Schaltungsanordnung nach Anspruch 3 und 5 **dadurch gekennzeichnet,** daß mit dem ersten Leitungsabschnitt (10) der zentralen Taktringleitung (9) je Hauptkoppler (13;14) die Takteingänge der dem Binärsignale in abgehender Übertragungsrichtung übertragenen Kopplerteil zugehörigen Raum-Zeit-Stufe (17), der dieser vorgeschalteten Parallel-Serien-Umsetzeinrichtung (18), eines dieser Umsetzeinrichtung (18) vorgeschalteten ersten Registers (19) und über einen Inverter (24) der Takteingang eines der zugehörigen Serien-Parallel-Umsetzeinrichtung (22) nachgeschalteten zweiten Registers (23) sowie der Eingangsanschluß der genannten weiteren Taktringleitung (27) verbunden ist, deren Ausgangsanschluß mit dem Takteingang eines dritten Registers (20) verbunden ist, welches eingangsseitig mit dem einen Leitungsabschnitt (25) der zugehörigen Hauptschiene (25,26) und ausgangsseitig mit Signaleingängen des ersten Registers (19) verbunden ist,
und daß die Serien-Parallel-Umsetzeinrichtung (22) und die ihr vorgeschaltete Raum-Zeit-Stufe (21) mit Takteingängen an dem zweiten Leitungsabschnitt (11) der zentralen Taktringleitung (9) angeschlossen sind.

7. Schaltungsanordnung nach Anspruch 6, **dadurch gekennzeichnet,** daß die Ringleitungsanordnung (6) und die Taktringleitungen (9,27) jeweils eine solche Länge aufweisen, daß die über sie übertragenen Binärsignale bzw. Taktimpulse eine Laufzeit entsprechend einer maximalen Phasenverschiebung von 180°C bezogen auf die an sie abgegebenen Binärsignale bzw. Taktimpulse erfahren.

8. Schaltungsanordnung nach Anspruch 4 und 5, **dadurch gekennzeichnet,** daß mit dem ersten Leitungsabschnitt (10) der zentralen Taktringleitung (9) je Hauptkoppler (40) die Takteingänge einer zu dem jeweiligen, Binärsignale in abgehender Übertragungsrichtung übertragenen Kopplerteil gehörenden Raum-Zeit-Stufe (41), der dieser Stufe vorgeschalteten Parallel-Serien-Umsetzeinrichtung (42) sowie eines der Parallel-Serien-Umsetzeinrichtung (42) vorgeschalteten ersten Registers (43) und über die genannte weitere Taktleitung (47) der Takteingang eines zweiten Registers (44) verbunden sind, welches eingangsseitig mit einem Leitungsabschnitt (25) der betreffenden Hauptschiene (25,26) und ausgangsseitig mit den Eingängen des ersten Registers (43) verbunden ist,
und daß die genannte weitere Taktleitung (48) mit den Takteingängen der zu dem zugehörigen, Binärsignale in ankommender Übertragungsrichtung übertragenen Kopplerteil gehörenden Raum-Zeit-Stufe (45) und der mit dieser verbundenen Serien-Parallel-Umsetzeinrichtung (46) des betreffenden Hauptkopplers (40) verbunden ist.

9. Schaltungsanordnung nach einem der Ansprüche 5 bis 8, **dadurch gekennzeichnet,** daß die Raum-Zeit-Stufen (27,21,42,51) aus integrierten Speicher-Zeit-Schalteranordnungen aufgebaut sind.

10. Schaltungsanordnung nach einem der Ansprüche 5 bis 9, **dadurch gekennzeichnet,** daß jede Parallel-Serien-Umsetzeinrichtung (18,42) die auf n Leitungen parallel auftretenden Binärsignale nacheinander als jeweils n Bits umfassende Serienwörter an x Eingänge der mit ihr verbundenen Raum-Zeit-Stufe (17,41) abgibt, daß jede Serien-Parallel-Umsetzeinrichtung (22,46) die ihr an x Eingängen von ihrer zugehörigen Raum-Zeit-Stufe (21;45) zugeführten, jeweils n Bits umfassenden Binärsignale in parallel auftretende Binärsignale über n Leitungen abgibt,
und daß x eine positive ganze Zahl ist, die der Beziehung x ≦ n genügt.

## Claims

1. Circuit arrangement for switching binary signals, preferably PCM signals, having a given number n (for example 8) bits in each case which occur with a fixed signalling rate (for example 8 kbit/s) and which are to be transmitted from/to interface circuits (35, 36) which are connected in each case to one group busbar (31, 32) of a plurality of group busbars, on each of which busbars binary signals can be transmitted in parallel in a total of m • n time cells repeated cyclically in pulse frames, where m is a given integer (for example 32) and n is the number of bits belonging to a binary signal, and having a ring line arrangement (6) comprising a plurality of individual ring lines, the ring lines of which have in each case a first line section (7) and a second line section (8) connected thereto, and to the two line sections (7, 8) of which the group busbars (31, 32) can be connected via group couplers (30), characterised in that each group coupler (30) is connected to two line sections (25, 26), serving to transmit binary signals in different directions, of a main coupler (13; 14) containing space/time stages (17, 21) which supplies binary signals via a space/time stage (17) to a first line section (7) of the ring line arrangement (6) and receives binary signals from a second line section (8) via a further space/time stage (21).

2. Circuit arrangement according to Claim 1, characterised in that the ring line arrangement (6) has a central clock ring line (9) which has a first line section (10) which is associated with the first line sections (7) of the ring line arrangement (6), is connected to a clock pulse source (4) and carries clock and synchronisation pulses, and has a second line section (11) connected thereto which is associated with the second line sections (8) of the ring line arrangement (6), and in that the group coupler (30) and the main coupler (13; 14) are connected via separate clock lines (28, 29, 33, 34; 47, 48) to the two line sections (10, 11) of the central clock ring line (9).

3. Circuit arrangement according to Claim 2, characterised in that the input terminal of a further clock ring line (27) is connected to the first line section (10) of the central clock ring line (9) for each main coupler (13; 14), which further clock ring line with its line sections (28, 29) is associated with the line sections (25, 26) of the main busbars (25, 26) connected to the respective main coupler (13 or 14 respectively), and the two line sections (28, 29) of which are connected to the clock lines (33, 34) leading to the associated interface circuits (35, 36) via the group coupler (30) connected to the respective main coupler (13; 14) in each case.

4. Circuit arrangement according to Claim 2, characterised in that the input terminal of a further clock ring line (47) is connected to the first line section (10) of the central clock ring line (9) for each main coupler (40), which further clock ring line has a line section sending clock pulses and a line section returning clock pulses, to which a clock line is connected via the group coupler connected to the respective main coupler (40) in each case, which clock line leads to the associated interface circuits outputting binary signals, and in that in addition, a separate clock line (48) is connected to the second line section (11) of the central clock ring line (9) for each main coupler (40), which separate clock line is connected via the group coupler connected to the respective main coupler (40) in each case to the associated interface circuits receiving binary signals.

5. Circuit arrangement according to one of Claims 1 to 4, characterised in that binary signals comprising n bits in each case can be transmitted over each ring line of the ring line arrangement (6) in pulse frames occurring with cyclical repetition from the first line section (7) to the second line section (8) in p (for example 32) successive time cells, where p is a given integer, and in that each group coupler (10) with its coupler part transmitting binary signals in outgoing transmission direction is connected to the first line sections (7) of all the ring lines via a switching device of a main coupler (13; 14) comprising a parallel/serial conversion device (18) and a space/time stage (17), and with its coupler part transmitting binary signals in incoming transmission direction to the second line sections (8) of all the ring lines of the ring line arrangement (6) via a switching device of the main coupler (13; 14) comprising a space/time stage (21) and a serial/parallel conversion device (22).

6. Circuit arrangement according to Claims 3 and 5, characterised in that connected to the first line section (10) of the central clock ring line (9) for each main coupler (13; 14) are the clock inputs of the space/time stage (17) associated with the coupler part transmitting binary signals in outgoing transmission direction, the parallel/serial conversion device (18) connected upstream of said space/time stage, a first register (19) connected upstream of said conversion device (18), and via an inverter (24) the clock input of a second register (23) connected downstream of the associated serial/parallel conversion device (22), as well as the input terminal of the aforesaid further clock ring line (27), the output terminal of which is connected to the clock input of a third register (20), which is connected on the input side to the one line section (25) of the associated main busbar (25, 26) and on the output side to signal inputs of the first register (19), and in that the serial/parallel conversion device (22) and the space/time stage (21) connected upstream thereof are connected with clock inputs to the second line section (11) of the central clock ring line (9).

7. Circuit arrangement according to Claim 6, characterised in that the ring line arrangement (6) and the clock ring lines (9, 27) in each case have such a length that the binary signals or clock pulses transmitted over them experience a propagation time corresponding to a maximum phase shift of 180° relative to the binary signals or clock pulses output to them.

8. Circuit arrangement according to Claims 4 and 5, characterised in that connected to the first line section (10) of the central clock ring line (9) for each main coupler (40) are the clock inputs of a space/time stage (41) associated with the respective coupler part transmitting binary signals in outgoing transmission direction, the parallel/serial conversion device (42) connected upstream of said space/time stage as well as a first register (43) connected upstream of the parallel/serial conversion device (42), and via the aforesaid further clock line (47) the clock input of a second register (44), which is connected on the input side to one line section (25) of the respective main busbar (25, 26) and on the output side to the inputs of the first register (43), and in that the aforesaid further clock line (48) is connected to the clock inputs of the space/time stage (45) belonging to the associated coupler part transmitting binary signals in incoming transmission direction and to the serial/parallel conversion device (46) of the respective main coupler (40) connected thereto.

9. Circuit arrangement according to one of Claims 5 to 8, characterised in that the space/time stages (27, 21, 42, 51) are constructed from integrated memory-time switch arrangements.

10. Circuit arrangement according to one of Claims 5 to 9, characterised in that each parallel/serial conversion device (18, 42) successively outputs the binary signals occurring in parallel on n lines as serial words comprising n bits in each case to x inputs of the space/time stage (17; 41) connected thereto, in that each serial/parallel conversion device (22, 46) outputs the binary signals, comprising n bits in each case and supplied to it at x inputs from its associated space/time stage (21; 45), in binary signals occurring in parallel over n lines, and in that x is a positive integer which fulfils the relation $x \leqq n$.

**Revendications**

1. Montage pour la commutation de signaux binaires comportant respectivement un nombre prédéterminé n de bits (par exemple 8), notamment des signaux MIC, qui apparaissent avec une cadence fixe de transmission (par exemple 8 kbits/s) et doivent être transmis par/vers des circuits de raccordement (35,36), qui sont raccordés respectivement à un bus de groupe (31,32) faisant partie d'une multiplicité de bus de groupe, dans chacun desquels des signaux binaires doivent être transmis d'une manière répétée cycliquement dans des trames d'impulsions, en parallèle dans un ensemble de m.n créneaux temporels, m étant un nombre entier prédéterminé (par exemple 32) et n le nombre des bits appartenant à un signal binaire, et comportant un dispositif de lignes en anneau (6), qui comprend une multiplicité de lignes individuelles en anneau et dont les lignes en anneau possèdent respectivement une première section (7) et une seconde section (8) raccordée à la précédente et aux deux sections (7,8) desquelles peuvent être raccordés les bus de groupe (31,32) au moyen de coupleurs de groupe (30), caractérisé par le fait que chaque coupleur de groupe (30) est raccordé à deux sections de lignes (25,26), qui sont utilisées pour la transmission de signaux binaires dans des directions différentes, d'un coupleur principal (13;14) comportant des étages spatio-temporels (17,21) et qui envoient des signaux binaires à une première section de ligne (7) des dispositifs formant lignes en anneau (6), par l'intermédiaire d'un étage spatio-temporel (17) et reçoit des signaux binaires d'une seconde section de ligne (8) par l'intermédiaire d'un autre étage spatio-temporel (21).

2. Montage suivant la revendication 1, caractérisé par le fait que le dispositif de lignes en anneau (6) comporte une ligne en anneau centrale de transmission de cadence (9), qui comporte une première section de ligne (10), qui est associée aux premières sections de ligne (7) du dispositif de lignes en anneau (6), qui est raccordée à une source d'impulsions de cadence (4) et qui transmet des impulsions de cadence et de synchronisation, et une seconde section de ligne raccordée à la précédente et qui est associée aux secondes sections de ligne (8) du dispositif de lignes en anneau (6), et que les coupleurs de groupe (30) et les coupleurs principaux (13; 14) sont raccordés par l'intermédiaire de lignes particulières de transmission de cadence (28,29,33,34; 47,48) aux deux sections (10,11) de la ligne en anneau centrale de transmission de cadence (9).

3. Montage suivant la revendication 2, caractérisé par le fait qu'à la première section (10) de la ligne en anneau centrale de transmission de cadence (9) est raccordée, respectivement pour chaque coupleur principal (13;14), la borne d'entrée d'une autre ligne en anneau de transmission de cadence (27), qui est associée, par ses sections (28,29), aux sections de ligne (25,26) des barres principales (25,26) raccordées au coupleur principal concerné (13 ou 14) et dont les deux sections de ligne (28,29) sont raccordées, par l'intermédiaire du coupleur de groupe (30) raccordé respectivement au coupleur principal concerné (13;14), aux lignes de transmission de cadence (33,34), qui aboutissent aux circuits associés de raccordement (35,36).

4. Montage suivant la revendication 2, caractérisé par le fait qu'à la première section (10) de la ligne en anneau centrale de transmission de cadence (9) est raccordée, pour chaque coupleur principal (40), la borne d'entrée d'une autre ligne en anneau de transmission de cadence (47), qui possède une section envoyant des impulsions de cadence et une section renvoyant des impulsions de cadence, à laquelle est raccordée, par l'intermédiaire du coupleur de groupe raccordé respectivement au coupleur principal concerné (40), une ligne de transmission de cadence qui est raccordée à des circuits de raccordement associés délivrant des signaux binaires, et qu'à la seconde section (11) de la ligne centrale en anneau de transmission de cadence (9) est en outre raccordée, pour chaque coupleur principal (40), une ligne particulière de transmission de cadence (48), qui est raccordée par l'intermédiaire du coupleur de groupe raccordé respectivement au coupleur principal concerné (40), aux circuits associés de raccordement, qui reçoivent des signaux binaires.

5. Montage suivant l'une des revendications 1 à 4, caractérisé par le fait que des signaux binaires comportant chacun n bits peuvent être transmis par l'intermédiaire de chaque ligne en anneau du dispositif de lignes en anneau (6), dans des trames d'impulsions apparaissant d'une manière cyclique répétée, peuvent être transmis dans p (par exemple 32) canaux temporels successifs, de la première section de ligne (7) à la seconde section de ligne (8), p étant un nombre entier prédéterminé, et que chaque coupleur de groupe (10) est raccordé par sa partie, qui transmet des signaux binaires dans le sens de transmission de départ, et par l'intermédiaire d'un dispositif de commutation comprenant un dispositif de commutation parallèle-série 18 et un étage spatio-temporel (17), d'un coupleur principal (13,14) aux premières sections (7) de toutes les lignes en anneau et, par sa partie transmettant des signaux binaires dans le sens de transmission d'arrivée, par l'intermédiaire d'un dispositif de commutation du coupleur principal (13;14), qui comprend un étage spato-temporel (21) et un dispositif de conversion série-parallèle (22), aux secondes sections (8) de toutes les lignes en anneau du dispositif de lignes en anneau (6).

6. Montage suivant les revendications 3 et 5, caractérisé par le fait qu'à la première section (10) de la ligne centrale en anneau de transmission de cadence (9) sont raccordés, pour chaque coupleur principal (13;14), les entrées de cadence de l'étage spatio-temporel (17) associé à la partie du coupleur qui transmet des signaux binaires dans le sens de transmission de départ, le dispositif de conversion parallèle-série (18) branché en amont de cet étage, d'un premier registre (19) branché en amont de ce dispositif de commutation (18) et, par l'intermédiaire d'un inverseur (14), l'entrée de cadence d'un second registre (23) branché en aval du dispositif de commutation série-parallèle associé (22) ainsi que la borne d'entrée de ladite autre ligne en anneau de transmission de cadence (27), dont la borne de sortie est raccordée à l'entrée de cadence d'un troisième registre (20), qui est raccordé, côté entrée, à une section de ligne (25) de la barre principale associée (25,26) et, côté sortie, aux entrées des signaux du premier registre (19), et

que le dispositif de conversion série-parallèle (22) et l'étage spatio-temporel (21), qui est branché en amont de ce dispositif, sont raccordés à des entrées de cadence, à la seconde section (11) de la ligne centrale en anneau de transmission de cadence (9).

7. Montage suivant la revendication 6, caractérisé par le fait que le dispositif de lignes en anneau et les lignes en anneau de transmission de cadence (9,27) possèdent respectivement une longueur telle que les signaux binaires et les impulsions de cadence, qui sont transmis par l'intermédiaire de ces lignes, sont retardés d'un temps de propagation qui correspond à un déphasage maximum de 180° rapporté aux signaux binaires ou aux impulsions de cadence, qui sont envoyées à ces lignes.

8. Montage suivant les revendications 4 et 5, caractérisé par le fait qu'à la première section (10) de la ligne centrale en anneau de transmission de cadence (9) sont raccordées les entrées de cadence d'un étage spatio-temporel (41) qui appartient à la partie de couplage respective, qui transmet des signaux binaires dans le sens de transmission de départ, du dispositif de conversion parallèle-série (42) branché en amont de cet étage ainsi que d'un premier registre (43) branché en amont du dispositif de conversion parallèle-série (42) et, par l'intermédiaire de ladite autre ligne de transmission de cadence (47), l'entrée de cadence d'un second registre (44), qui est raccordé côté entrée à une section de ligne (25) de la barre principale concernée (25,26) et, côté sortie, aux entrées du premier registre (43), et que l'autre ligne indiquée de transmission de cadence (48) est raccordée aux entrées de cadence de l'étage spatio-temporel (45) qui appartient à la partie associée du coupleur qui transmet des signaux binaires dans le sens de transmission d'arrivée, et du dispositif de conversion série-parallèle (46), qui est raccordé à cet étage, du coupleur principal concerné (40).

9. Montage suivant l'une des revendications 5 à 8, caractérisé par le fait que les étages spatio-temporels (27, 21,42,51) sont constitués par des dispositifs intégrés de commutation temporelle à mémoire.

10. Montage suivant l'une des revendications 5 à 9, caractérisé par le fait que chaque dispositif de conversion parallèle-série (18,42) délivre successivement les signaux binaires, qui apparaissent en parallèle dans n conducteurs, sous la forme de mots en série, comprenant chacun n bits, à x entrées de l'étage spatio-temporel (17;41) qui est raccordé à ce dispositif, que chaque dispositif de conversion série-parallèle (22,46) délivre par l'intermédiaire de n lignes les signaux binaires qui lui sont envoyés à x entrées de l'étage spatio-temporel (21;45) qui lui est associé, et qui contiennent respectivement n bits, sous la forme de signaux binaires apparaissant en parallèle, et que x est un nombre entier positif qui satisfait à la relation x ≤ n.

Fig. 1

Fig. 2

Fig. 3

Fig.4